# EUROPEAN PATENT APPLICATION

(11) **EP 1 072 805 A2**
(43) Date of publication of application: **31.01.2001**
(21) Application number: 00306104.1
(22) Date of filing: 18.07.2000
(51) Int. Cl.: F16C 32/04

(54) **Magnetic bearing device**

(30) Priority: 26.07.1999 JP 21094799
(71) Applicant: SEIKO SEIKI KABUSHIKI KAISHA, Narashino-shi Chiba (JP)
(72) Inventor: Shi, Yongwei, Narashino-shi, Chiba (JP); Otachi, Yoshinobu, Narashino-shi, Chiba (JP)
(74) Representative: Sturt, Clifford Mark

(57) **Abstract**

To provide a magnetic bearing device which is not large in height in the axial direction, which is compact, and which is advantageous in terms of high-speed rotation. An upper axial electromagnet is provided in an upper portion of a stator and inside an upper radial position detection sensor and an upper radial electromagnet in the radial direction so as to face an upper target. On the other hand, a lower axial electromagnet is provided in a portion of the stator above a lower target and inside a lower radial electromagnet and a lower radial position detection sensor in the radial direction. The necessary axial length for the arrangement of the upper and lower axial electromagnets is not longer than that for the arrangement of the upper radial position detection sensor, the upper radial electromagnet, a motor, the lower radial position detection sensor, and the lower radial electromagnet.

## Description

The present invention relates generally to a magnetic bearing device and, more particularly, to a magnetic bearing device which is not large in height in the axial direction, which is compact, and which is advantageous in terms of high-speed rotation.

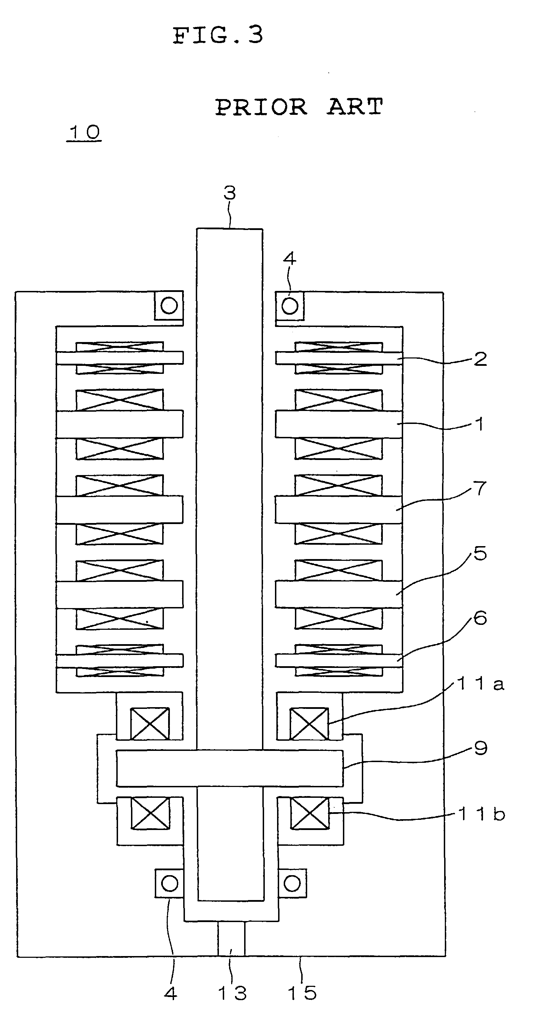

Fig. 3 illustrates a conventional magnetic bearing device 10 of a five axes control type. An upper radial electromagnet 1 in the arrangement shown in Fig. 3 is capable of adjusting the position in the radial direction (hereinafter referred to simply as "radial position") of an upper portion of an inner rotor 3 with an adjustment meter or the like (not shown) based on a radial position detected by an upper radial position detection sensor 2. On the other hand, a lower radial electromagnet 5 is capable of adjusting the radial position of a lower portion of the inner rotor 3 with an adjustment meter or the like (not shown) based on a radial position detected by a lower radial position detection sensor 6.

A motor 7 is provided between the upper radial electromagnet 1 and the lower radial electromagnet 5 to rotate the inner rotor 3 at a high speed. A disk 9 is fixed to a portion of the inner rotor 3 below the lower radial electromagnet 5. The disk 9 is attracted upward by an upper axial electromagnet 11a and is attracted downward by a lower axial electromagnet 11b.

An axial sensor 13 is provided in a lower portion of a cylindrical casing 15 so as to face the lower end of the inner rotor 3. The position in the axial direction (hereinafter referred to simply as "axial position") of the inner rotor 3 can be adjusted by balancing the attractions of the upper and lower axial electromagnets 11a and 11b with an adjustment meter or the like on the basis of the axial position detected by the axial sensor 13.

Rolling bearings 4 are provided at upper and lower positions along the circumferential surface of the inner rotor 3 for the purpose of preventing the inner rotor 3 or the disk 9 from being brought into contact with some of the upper radial electromagnet 1, the lower radial electromagnet 5, the upper radial position detection sensor 2, the lower radial position detection sensor 6, the upper axial electromagnet 11a, the lower axial electromagnet 11b, the axial sensor 13, etc., when the inner rotor 3 rotates in an abnormal fashion.

The above-described magnetic bearing device 10, however, has an increased height in the axial direction since the upper and lower axial electromagnets 11a and 11b are disposed below the lower radial electromagnet 5. Therefore, the above-described arrangement is adverse to designs for smaller magnetic bearing devices. This problem is particularly considerable in the case where restriction is put on the size in the direction of height.

Moreover, since the inner rotor 3 is lengthened, the frequency of bending vibration is reduced, which may disadvantageously affect high-speed rotation.

The present invention has been made in view of the above-described problems of the conventional art, and an object of the present invention is therefore to provide a magnetic bearing device which is not large in height in the axial direction, which is compact, and which is advantageous in terms of high-speed rotation.

To achieve the above-described object, according to the present invention, there is provided a magnetic bearing device comprising: a rotating member supported in a floating state by magnetic force; at least one set of radial position detection means for detecting the radial position and/or the inclination of the rotating member; at least one set of radial position adjustment means for adjusting the radial position and/or the inclination of the rotating member based on the radial position and/or the inclination detected by the radial position detection means; axial position detection means for detecting the axial position of the rotating member; and axial position adjustment means for adjusting the rotating member in the axial direction of the same on the basis of the axial position detected by the axial position detection means, the axial position adjustment means being provided inside the radial position detection means and/or the radial position adjustment means in the radial direction, or provided on an outer stator.

The rotating member rotates while being supported in a floating state. The rotating member comprises an outer rotor type and an inner rotor type described below. In the case of three axes control, the radial position control is made by one set of radial position detection means and one set of radial position adjustment means. In the case of five axes control, the radial position control is made by two sets of radial position detection means respectively provided in two places distanced apart from each other along the axial direction, and two sets of radial position adjustment means also provided in two places along the axial direction.

There is no particular limitation in determining the order in which the radial position detection means and the radial position adjustment means are arranged in the axial direction.

The axial position detection means detects the axial position of the rotating member. The axial position adjustment means adjusts the rotating member in the axial direction based on the axial position detected by the axial position detection means. The axial position adjustment means is provided inside the radial position detection means and/or the radial position adjustment means in the radial direction, or provided on the outer stator.

The above-described arrangement makes it possible to limit the height of the magnetic bearing device in the axial direction and, hence, to reduce the size of the magnetic bearing device. Since the axial length of the rotating member is also reduced, the frequency of bending vibration is increased. Therefore, the magnetic bearing device of the present invention is advantageous in terms of high-speed rotation.

Specifically, the magnetic bearing device according to the present invention is characterized in that the rotating member comprises: an outer rotor extending over the radial position detection means and the radial position adjustment means; a shaft provided at the center of rotation of the outer rotor; and a target provided on at least one end of the shaft, and in that the axial position adjustment means performs position adjustment with respect to the target.

The outer rotor extends over the radial position detection means and the radial position adjustment means, the shaft is provided at the center of rotation of the outer rotor, and the target is provided on at least one end of the shaft. A stator is formed inside the radial position detection means and the radial position adjustment means in the radial direction. Accordingly, the axial position adjustment means is provided inside the stator in the radial direction.

The axial position adjustment means performs position adjustment with respect to the target.

The magnetic bearing device according to the present invention is characterized in that the rotating member comprises an inner rotor provided at the center of each of the radial position detection means and the radial position adjustment means, and a target provided on at least one end of the inner rotor, and in that the axial position adjustment means performs position adjustment with respect to the target.

The rotating member comprises the inner rotor provided at the center of each of the radial position detection means and the radial position adjustment means, and the target is provided on at least one end of the inner rotor. A stator is formed outside the radial position detection means and the radial position adjustment means in the radial direction. Accordingly, the axial position adjustment means is provided outside the stator in the radial direction.

The axial position adjustment means performs position adjustment with respect to the target.

The magnetic bearing device according to the present invention is characterized in that a sliding bearing is provided on the stator so as to face the rotating member or the shaft with a predetermined gap formed therebetween.

Ordinarily, rolling bearings or the like are used as touch down bearings for the rotating member or the shaft. For the provision of rolling bearings on the stator, however, an additional space in the axial direction is required. The need for such a space can be eliminated by employing a sliding bearing as the touch down bearing.

Further, the magnetic bearing according to the present invention is characterized in that the radial position adjustment means and rotating means for rotating the rotating member, or the rotating means, the radial position detection means, and the radial position adjustment means are formed as an integral bearingless motor.

Coils for the rotating means and for the radial position adjustment means are formed on one iron core to constitute an integral bearingless motor. Alternatively, coils for the rotating means, for the radial position detection means and for the radial position adjustment means may be formed on one iron core to constitute an integral bearingless motor.

In the bearingless motor, the magnetic forces generated by the motor coils provided in the rotating means are unbalanced by the magnetic forces generated by the radial position adjustment means to magnetically adjust the radial position while producing a rotating force.

Also in the case where the bearingless motor is used, the axial position adjustment means is provided inside in the radial direction or on the outer stator according to the case of the outer rotor or the inner rotor.

Embodiments of the present invention will now be described by way of further example only and with reference to the accompanying drawings, in which:-
Fig. 1 is a diagram showing the construction of a first embodiment of the present invention;
Fig. 2 is a diagram showing the construction of a second embodiment of the present invention; and
Fig. 3 is a diagram showing an example of a conventional magnetic bearing device of a five axes control type.

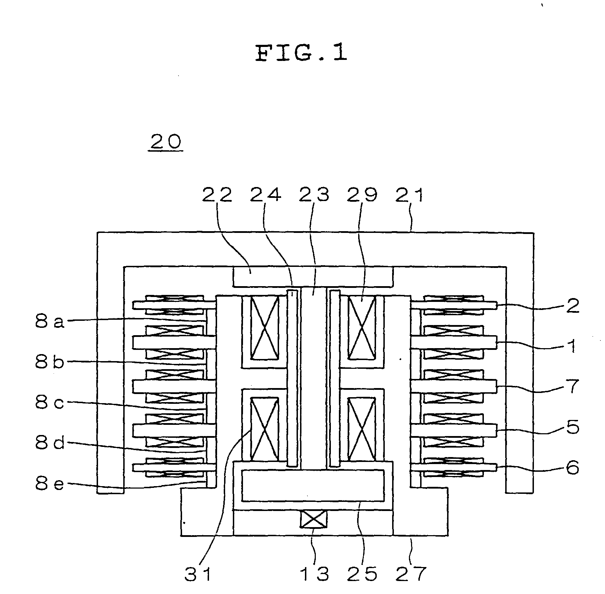

Preferred embodiments of the present invention will be described below with reference to the accompanying drawings. Fig. 1 is a diagram showing the construction of the first embodiment of the present invention. Components identical or corresponding to those shown in Fig. 3 are indicated by the same reference symbols, and the description for them will not be repeated. Fig. 1 shows a magnetic bearing device 20 of a five axes control type, in which a shaft 23 is provided on an upper central portion of an outer rotor 21 with an upper target 22 interposed therebetween. A lower target 25 is provided at the lower end of the shaft 23.

The outer rotor 21, the upper target 22, the shaft 23 and the lower target 25 together correspond to the rotating member. In an upper section of the space inside the outer rotor 21, an upper radial position detection sensor 2 and an upper radial electromagnet 1 are fixed on circumferential portions of a stator 27 by rings 8a and 8b. In a lower section of the space inside the outer rotor 21, a lower radial electromagnet 5 and a lower radial position detection sensor 6 are fixed on circumferential portions of the stator 27 by rings 8d and 8e.

The upper radial electromagnet 1 and the lower radial electromagnet 5 together correspond to the radial position adjustment means, and the upper radial position detection sensor 2 and the lower radial position detection sensor 6 together correspond to the radial position detection means. A motor 7, which corresponds to the rotating means, is fixed by a ring 8c on a circumferential portion of the stator 27. between the upper radial electromagnet 1 and the lower radial electromagnet 5.

An axial sensor 13 is provided in a central bottom portion of the stator 27 so as to face a central portion of the bottom surface of the lower target 25. A magnetic material or a metal is provided in the bottom surface of the lower target 25. The axial position thereof is detected from a change in the inductance between the bottom surface of the lower target 25 and the axial sensor 13.

An upper axial electromagnet 29 is provided in an upper portion of the stator 27 and inside the upper radial position detection sensor 2 and the upper radial electromagnet 1 in the radial direction so as to face the upper target 22. A magnetic material (not shown) is provided in a target portion of the upper target 22 which faces the upper axial electromagnet 29, thereby enabling the outer rotor 21 to be attracted downward by the upper axial electromagnet 29.

On the other hand, a lower axial electromagnet 31 is provided in a portion of the stator 27 above the lower target 25 and inside the lower radial electromagnet 5 and the lower radial position detection sensor 6 in the radial direction. A magnetic material (not shown) is provided in a target portion of the top surface of the lower target 25 which faces the lower axial electromagnet 31, thereby enabling the lower target 25 to be attracted upward by the lower axial electromagnet 31.

The operation of the first embodiment of the present invention will now be described.

A signal representing the axial position of the lower target 25 is detected by the axial sensor 13. On the basis of this axial position signal, a control command signal is formed by a compensator and an amplifier (both not shown) to cause suitable currents to flow through the upper and lower axial electromagnets 29 and 31, thereby floating the outer rotor 21 at a target position.

The necessary axial length for the arrangement of the upper and lower axial electromagnets 29 and 31 is not longer than that for the arrangement of the upper radial position detection sensor 2, the upper radial electromagnet 1, the motor 7, the lower radial position detection sensor 6, and the lower radial electromagnet 5. Thus, the height in the axial direction can be limited to realize a compact magnetic bearing device. Also, the length of the shaft 23 is reduced, so that the frequency of bending vibration is increased. Therefore, the magnetic bearing device of the present invention is advantageous in terms of high-speed rotation.

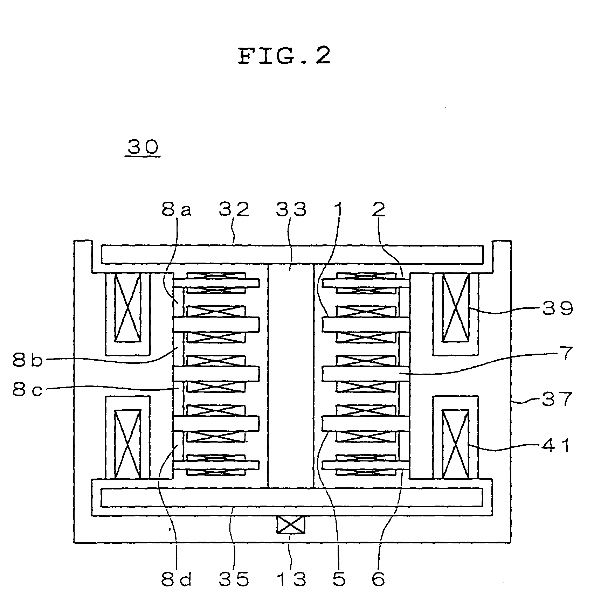

A second embodiment of the present invention will next be described. Fig. 2 is a diagram showing the construction of the second embodiment of the present invention. Components identical or corresponding to those shown in Fig. 3 are indicated by the same reference symbols, and the description for them will not be repeated. Fig. 2 shows a magnetic bearing device 30 of a five axes control type, in which an upper target 32 is provided on the upper end of an inner rotor 33. A compact disk, for example, can be placed on the upper target 32. A lower target 35 is provided on the lower end of the inner rotor 33.

Around an upper circumferential portion of the inner rotor 33, an upper radial position detection sensor 2 and an upper radial electromagnet 1 are fixed on an inner portion of a stator 37 by a ring 8a. Around a lower circumferential portion of the inner rotor 33, a lower radial position detection sensor 6 and a lower radial electromagnet 5 are fixed on an inner portion of the stator 37 by a ring 8d. A motor 7, which corresponds to the rotating means, is fixed on an inner portion of the stator 37 by rings 8b and 8c between the upper and lower radial electromagnets 1 and 5.

An axial sensor 13 is provided in a central bottom portion of the stator 37 so as to face a central portion of the bottom surface of the lower target 35. A magnetic material or a metal is provided in the bottom surface of the lower target 35. The axial position thereof is detected from a change in the inductance between the bottom surface of the lower target 35 and the axial sensor 13.

An upper axial electromagnet 39 is provided in an upper portion of the stator 37 and outside the upper radial position detection sensor 2 and the upper radial electromagnet 1 in the radial direction so as to face the upper target 32. A magnetic material (not shown) is provided in a target portion of the upper target 32 which faces the upper axial electromagnet 39, thereby enabling the upper target 32 to be attracted downward by the upper axial electromagnet 39.

On the other hand, a lower axial electromagnet 41 is provided in a portion of the stator 37 above the lower target 35 and outside the lower radial position detection sensor 6 and the lower radial electromagnet 5 in the radial direction. A magnetic material (not shown) is provided in a target portion of the top surface of the lower target 35 which faces the lower axial electromagnet 41, thereby enabling the lower target 35 to be attracted upward by the lower axial electromagnet 41.

The operation of the second embodiment of the present invention will now be described.

A signal representing the axial position of the lower target 35 is detected by the axial sensor 13. On the basis of this axial position signal, a control command signal is formed by a compensator and an amplifier (both not shown) to cause suitable currents to flow through the upper and lower axial electromagnets 39 and 41, thereby floating the inner rotor 33 at a target position.

The necessary axial length for the arrangement of the upper and lower axial electromagnets 39 and 41 is not longer than that for the arrangement of the upper radial position detection sensor 2, the upper radial electromagnet 1, the motor 7, the lower radial position detection sensor 6, and the lower radial electromagnet 5. Thus, the height in the axial direction can be limited to realize a compact magnetic bearing device. Also, the length of the inner rotor 33 is reduced, so that the frequency of bending vibration is increased. Therefore, the magnetic bearing device of the present invention is advantageous in terms of high-speed rotation.

In each of the above-described embodiments, the upper and lower axial electromagnets are provided in upper and lower portions of the stator by being spaced apart from each other. However, another arrangement, such as shown in Fig. 3, is also possible, in which the upper and lower axial electromagnets are provided on the opposite sides of the lower target in a lower portion of the stator.

Also, motor coils for the motor 7 and coils for the upper or lower electromagnet 1 or 5 may be formed on one iron core to constitute an integral bearingless motor (not shown). Also in such a case, the method of arranging the upper and lower axial electromagnets is the same as that in the above-described embodiments.

A third embodiment of the present invention will next be described with reference to Fig. 1.

In the arrangement shown in Fig. 1, a sliding bearing 24 is provided on the circumferential surface of the shaft 23. The sliding bearing 24 is adapted to support the outer rotor 21 in the radial and axial directions in order to prevent damage to the upper radial electromagnet 1, the lower radial electromagnet 5, the upper radial position detection sensor 2, the lower radial position detection sensor 6, the upper axial electromagnet 29, the lower axial electromagnet 31, the axial sensor 13, etc., when the outer rotor 21 rotates in an abnormal fashion. Thus, rolling bearings 4 or the like which have conventionally been used are replaced by the sliding bearing 24 as the touch down bearing to eliminate the need for the spaces for the bearings outwardly extending in the axial direction.

According to the present invention, as described above, the axial position adjustment means is provided inside the radial position detection means and the radial position adjustment means in the radial direction or provided on the outer stator, thereby limiting the height in the axial direction and reducing the size of the magnetic bearing device.

## Claims

1. A magnetic bearing device comprising:
a rotating member supported in a floating state by magnetic force;
at least one set of radial position detection means for detecting the radial position and/or an inclination of the rotating member;
at least one set of radial position adjustment means for adjusting the radial position and/or the inclination of the rotating member based on the radial position and/or the inclination detected by the radial position detection means;
axial position detection means for detecting the axial position of the rotating member; and
axial position adjustment means for adjusting the rotating member in an axial direction of the same on the basis of the axial position detected by the axial position detection means, the axial position adjustment means being provided inside the radial position detection means and/or the radial position adjustment means in a radial direction, or provided on an outer stator.

2. A magnetic bearing device according to claim 1, wherein the rotating member comprises:
an outer rotor extending over the radial position detection means and the radial position adjustment means;
a shaft provided at a center of rotation of the outer rotor; and
a target provided on at least one end of the shaft, and wherein
the axial position adjustment means performs position adjustment with respect to the target.

3. A magnetic bearing device according to claim 1, wherein the rotating member comprises:
an inner rotor provided at the center of each of the radial position detection means and the radial position adjustment means; and
a target provided on at least one end of the inner rotor, and wherein
the axial position adjustment means performs position adjustment with respect to the target.

4. A magnetic bearing device according to claim 1, wherein a sliding bearing is provided on the stator, the sliding bearing facing the rotating member or the shaft with a predetermined gap formed therebetween.

5. A magnetic bearing device according to claim 1, wherein the radial position adjustment means and rotating means for rotating the rotating member, or the rotating means, the radial position detection means, and the radial position adjustment means are formed as an integral bearingless motor.

6. A magnetic bearing device according to claim 2, wherein a sliding bearing is provided on the stator, the sliding bearing facing the rotating member or the shaft with a predetermined gap formed therebetween.

7. A magnetic bearing device according to claim 2, wherein the radial position adjustment means and rotating means for rotating the rotating member, or the rotating means, the radial position detection means, and the radial position adjustment means are formed as an integral bearingless motor.

8. A magnetic bearing device according to claim 3, wherein a sliding bearing is provided on the stator, the sliding bearing facing the rotating member or the shaft with a predetermined gap formed therebetween.

9. A magnetic bearing device according to claim 3, wherein the radial position adjustment means and rotating means for rotating the rotating member, or the rotating means, the radial position detection means, and the radial position adjustment means are formed as an integral bearingless motor.

10. A magnetic bearing device according to claim 4, wherein the radial position adjustment means and rotating means for rotating the rotating member, or the rotating means, the radial position detection means, and the radial position adjustment means are formed as an integral bearingless motor.
